# EUROPÄISCHE PATENTSCHRIFT

(11) **EP 1 848 623 B1**
(45) Veröffentlichungstag und Bekanntmachung des Hinweises auf die Patenterteilung: **20.07.2011**
(21) Anmeldenummer: 06742221.2
(22) Anmeldetag: 18.02.2006
(51) Int. Cl.: B62B 5/04

(54) **WEGFAHRSPERRE FÜR EINKAUFSWAGEN**
BLOCKING DEVICE FOR A SHOPPING CART
SYSTEME DE BLOCAGE D'UN CHARIOT

(30) Priorität: 18.02.2005 DE 202005002710 U; 18.02.2005 DE 202005002711 U; 18.02.2005 DE 202005002713 U; 18.02.2005 DE 202005002714 U; 26.09.2005 DE 202005015212 U; 05.10.2005 DE 202005015689 U
(43) Veröffentlichungstag der Anmeldung: 31.10.2007
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2006/000306
(87) Internationale Veröffentlichungsnummer: WO 2006/086977

(56) Entgegenhaltungen:
- GB-A- 2 384 175
- US-A- 2 964 140
- US-A- 3 117 655

## Beschreibung

### Technisches Gebiet

Die Erfindung betrifft einen Transportwagen mit lenkbaren Rollen.

Derartige Transportwagen werden von Einkaufsmärkten den Kunden für die Benutzung innerhalb eines zulässigen Bereichs zur Verfügung gestellt.

Um zu verhindern, dass ein Transportwagen auch außerhalb dieses Bereiches verwendet werden kann, kommen Wegfahrsperren zum Einsatz.

### Stand der Technik

Bei bekannten Wegfahrsperren wird die Wegfahrsperre durch magnetische Kräfte aktiviert, aus der GB A2384175 sind Mittel bekannt, durch welche mechanische Störgrößen - die zu einer Fehlauslösung führten könnten - kompensierbar sind.

An der Grenze des zulässigen Bereichs befindet sich bodennah eine magnetische Zone. Beim Überfahren der magnetischen Zone wird durch magnetische Kräfte eine primäre Auslöseeinheit betätigt, welches einen mechanischen Ablauf initiiert, der dann schließendlich die Wegfahrsperre aktiviert.

Aufgrund der vergleichsweise geringen magnetischen Kräfte, ist die primäre Auslöseeinheit sehr filigran gehalten.

Diese filigrane, primäre Auslöseeinheit ist naturgemäß empfindlich gegenüber Erschütterungen. So kann es nachteilig vorkommen, dass durch Erschütterungen, die beim normalen Betrieb des Transportwagens auch innerhalb des zulässigen Bereichs auftreten ungewollt das filigrane, primäre Auslöseelement betätigt wird und somit auch die Wegfahrsperre aktiviert wird.

In der noch nicht offen gelegten Gebrauchsmusteranmeldung DE 202005002714 ist das Problem behandelt, die filigrane, primäre Auslöseeinheit unempfindlicher gegen translatorisch wirkende Stöße zu machen, wie sie beispielsweise auftreten, wenn der Einkaufswagen gegen ein Hindernis (z.B. Regal etc.) stößt. Bei der dort beschriebenen primären Auslöseeinheit ist der Schwerpunkt so gewählt, dass er auf der Drehachse liegt, wodurch einfache translatorische Stöße kein Drehmoment erzeugen.

In der noch nicht offen gelegten Gebrauchsmusteranmeldung DE 202005002713 ist das Problem behandelt, dass beim Überfahren der magnetischen Zone die filigrane, primäre Auslöseeinheit zwar betätigt wird, dann aber wieder so schnell in ihre Ausgangslage zurückkehrt, dass der weitere mechanische Ablauf, der schließendlich die Wegfahrsperre aktiviert noch nicht initiiert wurde.

Die beiden Probleme wurden durch getrennte Vorrichtungen gelöst und führen daher zu einem erhöhten Teileaufwand.

Es hat sich nun zudem gezeigt, dass eine Vielzahl von Erschütterungen, die beim normalen Betrieb etwa dann auftreten, wenn der Einkaufswagen über eine unebene Fläche geschoben wird, eine Art Resonanz entstehen lassen, welche dann doch ein Drehmoment auf die filigrane, primäre Auslöseeinheit erzeugen.

Es hat sich auch gezeigt, dass Kunden, wenn sie einen Einkaufswagen - der sich außerhalb des zulässigen Bereichs befindet und dessen Wegfahrsperre daher aktiviert ist - wieder zurück in den zulässigen Bereich bringen den Einkaufswagen oftmals einseitig anheben. Hierdurch wirken die von der magnetischen Zone ausgehenden Kräfte nur vermindert stark auf die Wegfahrsperre.

### Offenbarung der Erfindung

### Technische Aufgabe

Es ist Aufgabe der Erfindung eine Wegfahrsperre zu schaffen, bei welcher die primäre Auslöseeinheit so ausgestaltet ist, dass sie sowohl unempfindlich gegenüber einzelnen Stößen als auch unempfindlich gegenüber einer Vielzahl von Erschütterungen ist und zusätzlich die Eigenschaft hat, im wesentlichen unabhängig von der Zeitdauer, während welcher die magnetischen Kräfte beim Überfahren der magnetischen Zone auf die primäre Auslöseeinheit wirken zuverlässig den weiteren mechanischen Ablauf zu initiieren, welcher dann schlussendlich die Wegfahrsperre aktiviert.

Eine weitere Aufgabe der Erfindung besteht darin, dass das Deaktivieren durch geringere Magnetfelder erfolgt als das Aktivieren um zu gewährleisten, dass die Wegfahrsperre an den Transportwagen, die mit aktivierten Wegfahrsperre zurück in den zulässigen Bereich gebracht werden zuverlässig auch dann wieder deaktiviert wird auch wenn der Einkaufswagen einseitig angehoben wird.

Generalisiert lässt sich die Aufgabe dahingehend definieren, dass die primäre Auslöseeinheit von Stößen und Erschütterungen weitestgehend unbeeinflußt ist, auf von Außen einwirkende, magnetisch hervorgerufene Kräfte jedoch sehr empfindlich und zuverlässig reagiert und nochmals empfindlicher auf von Außen einwirkende, magnetisch hervorgerufene Kräfte reagiert wenn es darum geht, die Wegfahrsperre zu deaktivieren.

### Technische Lösung

Die erfinderische Lösung sieht vor, die primäre Auslöseeinheit mit Gegenträgheitselementen auszustatten, welche die Auslöseeinheit unempfindlich gegenüber Stößen und Erschütterungen machen.

Zusätzlich wird ein Ansprechverhalten der Auslöseeinheit realisiert, welches das gewollte Aktivieren der Wegfahrsperre unabhängig von der Zeitdauer macht, während welcher die magnetischen Kräfte beim Überfahren der magnetischen Zone von außen wirken.

Die Überlegungen, welche zum Entstehen der vorliegenden Erfindung führten, machten sich hierbei die Tatsache zu Nutze, dass die Störkräfte und die Auslösekräfte auf unterschiedlichen physikalischen Effekten beruhen.

Die Störkräfte entstehen durch die Wechselwirkung mit der Masse aller Teile der Auslöseeinheit, die Auslösekräfte entstehen durch die Wechselwirkung einzelner Teile mit magnetischen Kräften.

Die Störkräfte wirken nun auf alle Teile der Auslöseeinheit, die magnetischen Kräfte hingegen nur auf einen Teil der Auslöseeinheit.

Weitere Überlegungen gingen davon aus, dass zwei Körper, wenn sie durch eine temporär wirkende Kraft aneinander gebracht werden anschließend aufgrund von Form- oder Kraftschluss weiterhin noch verbunden bleiben, auch wenn die temporär wirkende Kraft nicht mehr vorhanden ist.

Dieser Form- oder Kraftschluss ist mit mechanischen Mitteln oder ebenfalls durch magnetische Kräfte herstellbar.

Die Überlegungen betreffend des Teils der Aufgabe bei dem es darum geht, dass die Wegfahrsperre zum Deaktivieren besonders empfindlich auf von Außen wirkende, magnetisch hervorgerufene Kräfte reagiert machten sich die Erkenntnis zu eigen, dass Magneten, die sich innerhalb der Wegfahrsperre befinden die Wirkung der von Außen einwirkenden magnetischen Kräfte beeinflussen können.

Im vorliegenden Fall führten diese Überlegungen zu einer Lösung, wie sie in den Ansprüchen und Unteransprüchen formuliert ist.

### Vorteilhafte Wirkungen

Die stochastisch auftretenden Störkräfte eliminieren sich gegenseitig und führen zu keiner wesentlichen Bewegung der Auslöseeinheit, absichtlich erzeugte magnetische Kräfte, hingegen wirken gezielt auf die Teile der Auslöseeinheit, die bewegt werden sollen, um das Auslösen der Wegfahrsperre zu initiieren.

Diese gezielt bewegten Teile der Auslöseeinheit bleiben eine definierte Zeit in der gewünschten Position fixiert, und zwar auch dann noch, wenn die Wegfahrsperre nicht mehr im Einflussbereich der magnetischen Kraft liegt.

Beispielsweise ist es hierdurch möglich, eine magnetische Zone mit unterschiedlichen Geschwindigkeiten zu überfahren, ohne dass dies einen Einfluss auf das Auslösen der Wegfahrsperre hat.

Hierdurch wird die Funktion der Wegfahrsperre weitestgehend unabhängig von der Zeitdauer, während der die absichtlich erzeugten magnetischen Kräfte wirken.

Durch eine entsprechende Ausgestaltung des mechanischen Ablaufs innerhalb der Wegfahrsperre kehrt die Auslöseeinheit wieder in die Ausgangslage zurück sobald die Wegfahrsperre aktiviert ist.

In dieser Ausgangslage ist die primäre Auslöseeinheit bereit durch eine erneut von außen wirkende magnetische Kraft erneut einen mechanischen Ablauf innerhalb der Wegfahrsperre zu initiieren, der dann zu einer Deaktivierung der Wegfahrsperre führt.

Diese Ausgestaltung der Wegfahrsperre führt dazu, dass eine aktivierte Wegfahrsperre durch die gleiche Quelle der magnetischen Kraft, die zur Aktivierung führte wieder deaktivierbar ist.

Diese Quelle magnetischer Kraft kann wahlweise von der magnetischen Zone stammen, welche die Grenze des zulässigen Bereichs definiert oder von einem magnetischen Werkzeug, dessen sich Berechtigte (z.B. Mitarbeiter eines Supermarktes) bedienen.

Hierdurch wird zum einen vorteilhaft bewirkt, dass ein Einkaufswagen, der sich mit aktivierter Wegfahrsperre außerhalb des zulässigen Bereiches befindet sofort und problemlos von jedermann wieder frei benutzt werden kann, sobald der Einkaufswagen über die magnetische Zone zurück in den zulässigen Bereich bewegt wird.

Zum anderen ist es einem Berechtigten mit Hilfe des berührungslos arbeitenden magnetischen Werkzeuges, vorteilhaft bequem möglich, die Wegfahrsperre an jedem beliebigen Ort zu deaktivieren, was ein Zurückbringen des Einkaufswagens erheblich erleichtert.

Da das Deaktivieren durch geringere Magnetfelder erfolgt als das Aktivieren ist vorteilhaft gewährleistet, dass die Wegfahrsperre an den Transportwagen, die mit aktivierter Wegfahrsperre zurück in den zulässigen Bereich gebracht werden zuverlässig wieder deaktiviert wird, insbesondere auch dann, wenn der Einkaufswagen einseitig angehoben wird.

### Kurze Beschreibung der Zeichnungen

Nachfolgend ist ein mögliches Ausführungsbeispiel der Erfindung anhand von mehreren Figuren näher erläutert.

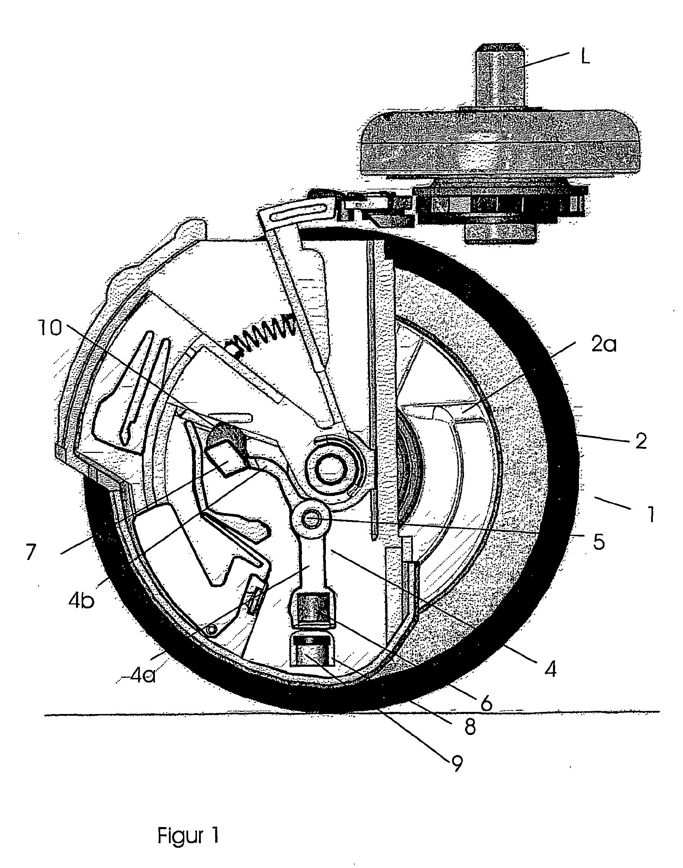

Die Figur 1 zeigt einen Blick von der Seite auf die teilweise geschnitten dargestellte Wegfahrsperre 1.

Die Rolle 2 der Wegfahrsperre 1 ist über die Lenkachse L an einem hier aus Gründen der Übersichtlichkeit nicht gezeigten Einkaufswagen verbunden. Die Rolle 2 besitzt einen Mitnehmer 2a, auf dessen Funktion später noch detailliert eingegangen wird.

Im Inneren der Wegfahrsperre ist eine primäre Auslöseeinheit 3 vorhanden, welche unter dem Einfluss eines Magnetfeldes hin bewegbar ist.

Die Auslöseeinheit 3 umfasst einen Hebel 4 mit zwei Hebelarmen (4a, 4b), der um einen Drehpunkt 5 drehbar ausgebildet ist.

Der eine Hebelarm 4a trägt ein Gewicht 6, der andere Hebelarm 4b hat an seinem Ende eine Art Sperre 7.

Die Sperre 7 am Arm 4b hält eine Kugel 10 in der Ruhelage. Die genaue Funktion der Kugel 10 wird nachfolgend noch genauerer beschrieben.

Hinter dem Hebelarm 4a befindet sich ein weiterer Hebel 8. Am Ende des Hebels 8 befindet sich ein Permanentmagnet 9. Der Hebel 8 ist um einen in dieser Darstellung nicht sichtbaren Drehpunkt 5a drehbar gelagert und über eine hier ebenfalls nicht sichtbare Verzahnung 12 mit dem Hebelarm 4a verbunden.

Die Verzahnung zwischen Hebel 8 und Hebelarm 4a sowie die Massen des Körpers 6 einerseits und des Permanentmagneten 9 andererseits wirken kompensierend auf die Auswirkungen von Drehbeschleunigungen und translatorische Beschleunigungen. Die bei Beschleunigungen auftretenden Momente des Hebels 4 um den Drehpunkt 5 werden durch das Moment des Hebels 8 um die Achse 5a weitestgehend kompensiert. Eine ungewollte Bewegung der Auslöseeinheit 3 kann so verhindert werden.

Das Gewicht 6 besteht aus einem Material, welches von dem Permanentmagneten 9 angezogen wird.

Diese Anziehungskraft des Permanentmagneten 9 auf das Gewicht 6 hat eine weitere, Störungen dämpfende Auswirkung auf die Auslöseeinheit, da der Permanentmagnet 9 das Gewicht 6 an sich zieht.

Durch diese Zugkraft wird der mögliche Einfluss von Metallteilen im Bereich der Fahrbahn verringert. Die direkte Nähe des Gewichts 6 zum Permanentmagneten 9 bewirkt, dass die magnetischen Kräfte bevorzugt zwischen diesen beiden Teilen wirken.

Ohne das Vorhandensein des Körpers 6 wäre es ansonsten möglich, dass der Permanentmagnet 6 aufgrund der Anziehungskraft, welche zwischen ihm und einem auf der Fahrbahn befindlichen Metallteil herrscht, eine Bewegung ausführt, die dann zu einem ungewollten Auslösen der Wegfahrsperre führt. Ein solches Metallteil ist beispielsweise ein Kanaldeckel.

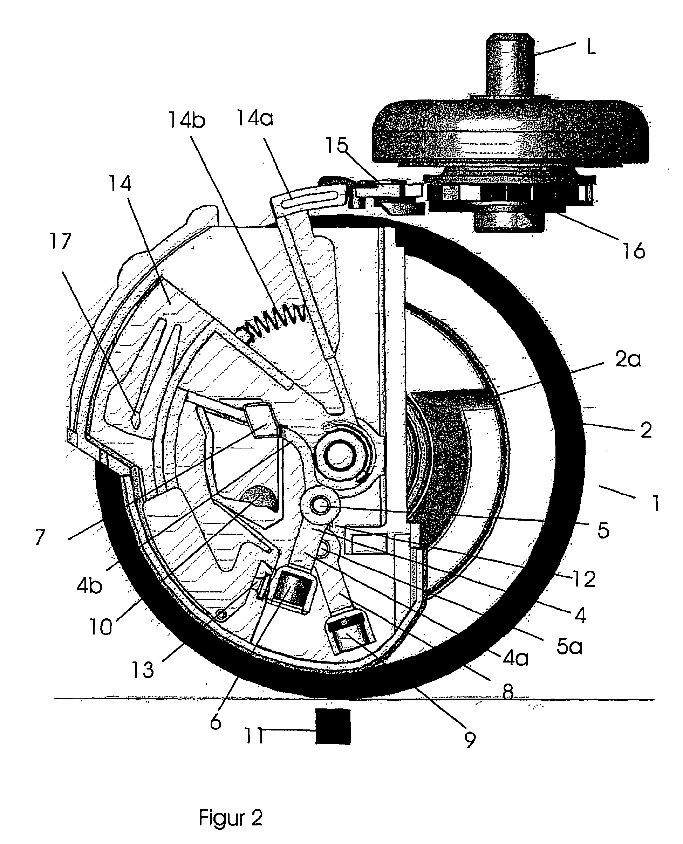

Die Figur 2 zeigt das Auslöseelement 4, nachdem ein im Boden eingelassener Magnet 11 überfahren wurde.

Der Magnet 11 ist bezüglich seiner Polung so angeordnet, dass zwischen dem Magneten 11 und dem Permanentmagneten 9 eine abstoßende Kraft auftritt. Bei dem Magneten 11 kann es sich sowohl um einen Permanentmagneten oder um einen Elektromagneten handeln.

Die abstoßende Kraft zwischen dem Permanentmagneten 9 und dem Magneten 11 ist so stark, dass die oben beschriebene anziehende Kraft zwischen dem Körper 6 und dem Magneten 9 überwunden wird.

Als Resultat dieser abstoßenden Kräfte zwischen Permanentmagnet 9 und dem Magneten 11 hat sich der Hebel 8 etwas entgegen des Uhrzeigersinns um den Drehpunkt 5a gedreht.

Über die Verzahnung 12 hat diese Drehung des Hebels 8 eine entgegengesetzte Drehung des Hebels 4 (mit den Hebelarmen 4a und 4b) um die Achse 5 bewirkt, mit der Folge, dass die Sperre 7 beiseite geschwenkt ist und die Kugel 10 freigegeben hat.

Durch die Drehung des Hebels 4 kommt der Hebelarm 4a an ein Halteelement, welches den Hebelarm 4a in der geschwenkten Position festhält und damit auch die gesamte Auslöseeinheit in einer definierten, ausgelösten Stellung.

Das Halteelement welches den Hebelarm 4a festhält kann auf die unterschiedlichsten Weisen ausgeführt sein.

Es kann auf Reib oder Formschluss basieren, etwa einer Anlaufschräge oder einem Art Klettverschluss.

Auch ist es möglich, die Tatsache auszunutzen, dass das Gewicht 6, welches wie oben schon erwähnt aus einem Material besteht, das von einem Magneten angezogen wird.

Im gezeigten Beispiel handelt es sich bei dem Halteelement um einen Permanentmagneten 13.

Von diesem Permanentmagneten 13 angezogen verbleibt das Gewicht 6 und damit auch die gesamte Auslöseeinheit in einer definierten Stellung.

Die Kugel 10 hat hierdurch genügend Zeit, einer vorgegebenen Bahn folgend eine Position einzunehmen, in welcher die Kugel 10 als Kupplung zwischen dem Rad 2 und einer Wippe 14 wirken kann.

Sobald sich das Rad 2 soweit gedreht hat, dass der Mitnehmer 2a die Kugel 10 berührt, wirkt die Kugel 10 dann auch tatsächlich als Kupplung und bewegt die Wippe 14 im Sinne der Raddrehung und drückt nun eine Ratsche 15 an eine Verzahnung 16. Die Ratsche 15 ist an einem hier nicht gezeigten Teil des Gehäuses schwenkbar befestigt. Eine Feder 14 b sorgt für eine gewisse Vorspannung des Teils 14a bezüglich des Rests der Wippe 14.

In dieser Position verbleibt die Wippe 14 fixiert durch ein Halteelement 17.

Dieses Halteelement 17 hat die Eigenschaft, dass es die Wippe 14 wieder freigibt, wenn die Wippe 14 ein weiteres Mal von der eingekuppelten Kugel 10 in Drehrichtung des Rades 2 mitgenommen wird.

Diese Funktion ist vergleichbar mit dem Verhalten eines Kugelschreibers, bei dem durch nochmaligen Druck auf einen Druckknopf die Mine wieder in das Gehäuse zurückkehrt.

Die Ratsche 15 und die Verzahnung 16 sind so ausgebildet, dass zunächst der Lenkwinkel des Rades um die Achse L nur in eine Richtung verändert werden kann. Sobald ein gewisser Lenkwinkel erreicht ist, bleibt dieser Lenkwinkel fest.

Durch das Anbringen von je einer Wegfahrsperre an der Vorder- und Hinterachse des Einkaufswagens und einer Konstellation, dass die Lenkwinkel in der festen Stellung schräg zueinander stehen ist es nicht mehr möglich, normal geradeaus zu fahren.

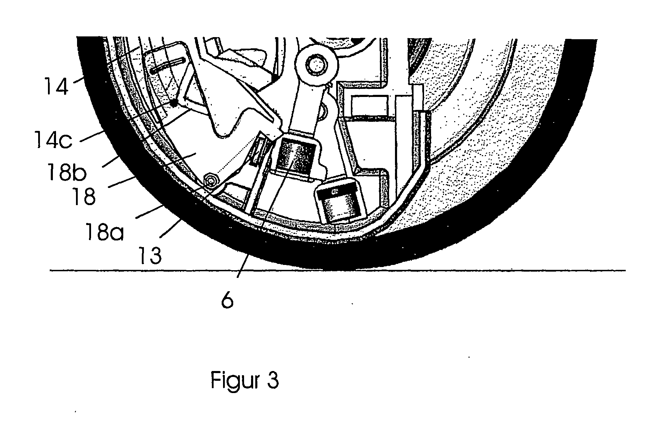

Die Figur 3 zeigt einen Detailausschnitt um den Permanentmagneten 13.

Wie beschrieben wird das Gewicht 6 durch den Permanentmagneten 13 gehalten, um der Kugel 10 genügend Zeit zu geben, in die Position zu gelangen, in welcher sie als Kupplung zwischen dem Rad 2 und der Wippe 14 wirkt.

Für die Funktion der Wegfahrsperre ist es aber auch wichtig, dass die Auslöseeinheit 3 anschließend wieder in die in Figur 1 beschriebene Ausgangslage zurückkehrt. Nur so ist ein abwechselndes Aktivieren und Deaktivieren der Wegfahrsperre möglich.

Damit die Auslöseeinheit 3 wieder in die Ausgangslage zurückkehren kann muss das Gewicht 6 wieder vom Permanentmagneten 13 getrennt werden.

Hierzu ist ein Hebel 18 vorgesehen, der gesteuert durch die Bewegung der Wippe 14 gegen das Gewicht 6 drückt und dadurch vom Permanentmagneten 13 löst.

Der Hebel 18 ist um eine Achse 18a drehbar gelagert. Die transparente Darstellung des Hebels 18 erlaubt den Blick auf eine Kulisse 18b, welche in Kontakt mit einem Mitnehmer 14c der Wippe 14 steht.

Durch die Bewegung der Wippe 14 wird der Hebel 18 so verschwenkt, dass er das Gewicht 6 so weit vom Permanentmagneten 13 wegdrückt, bis die magnetische Kraft nicht mehr ausreicht, um das Gewicht 6 zu halten.

Die Auslöseeinheit 3 und alle mit ihm verbundenen Teile können nun wieder in die Grundstellung zurückkehren, in der sie sich befunden haben, bevor der im Boden eingelassene Magnet 11 (gemäß Figur 2) überfahren wurde.

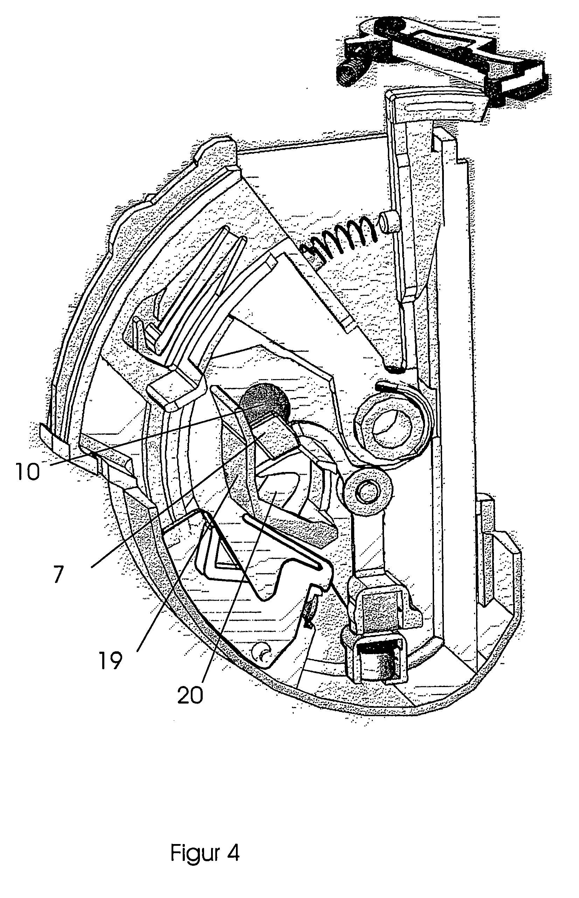

Anhand der Figur 4 ist ersichtlich, dass die Kugel 10, nachdem die Klappe 7 weggeschwenkt ist, entlang der Rinne 19 in einen Kanal 20 rollen kann.

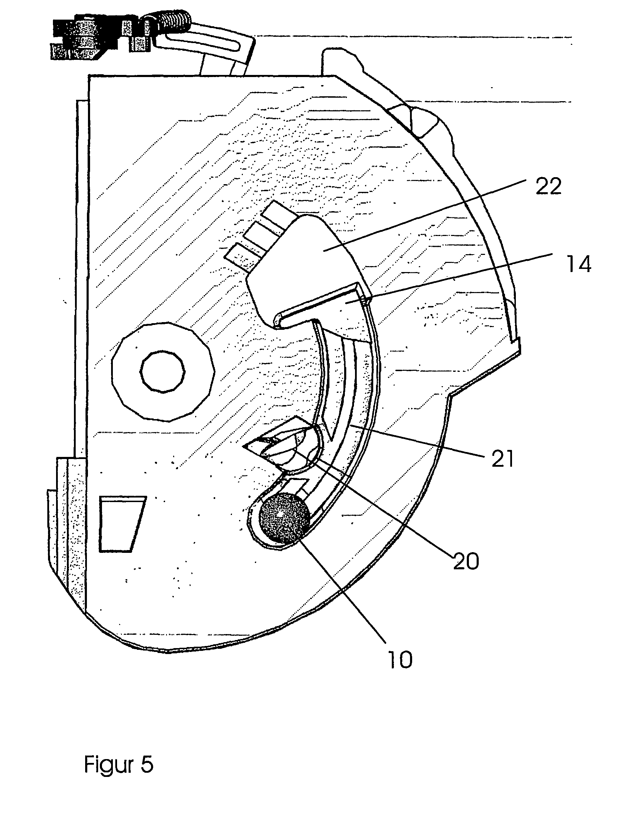

Die Figur 5 zeigt die Situation, nachdem die Kugel 10 durch den Kanal 20 gerollt ist. Die Kugel befindet sich nun in einer Position, in welcher sie als Kupplung zwischen dem Mitnehmer 2a an der Rolle 2 und der Wippe 14 wirken kann.

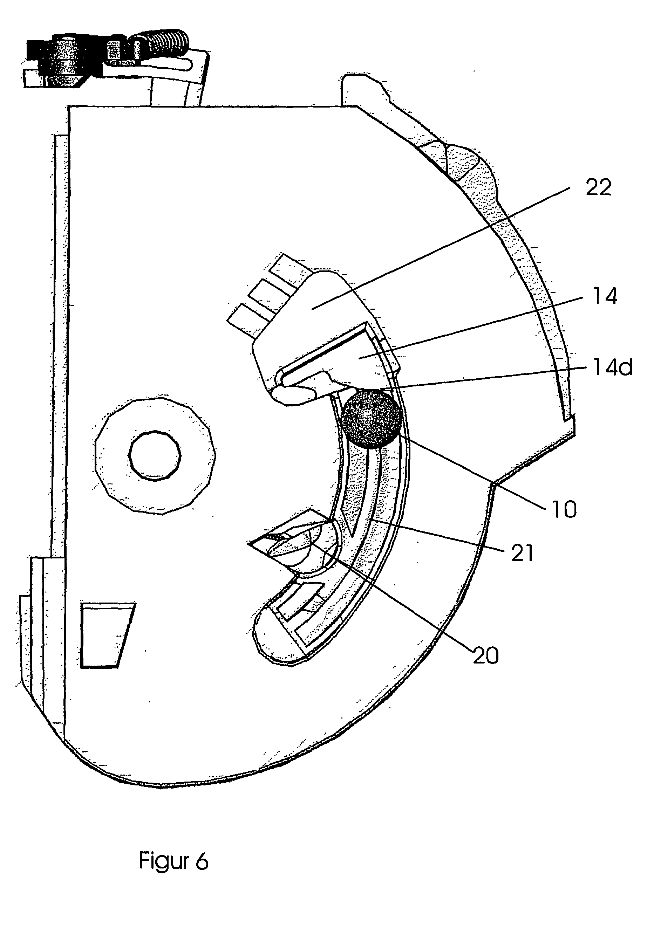

Die Figur 6 zeigt die Kugel 10 wie sie von dem aus Gründen der Übersichtlichkeit nicht dargestellten Mitnehmer 2a entlang des Kanals 21 transportiert wird. Der Kanal 21 ist nur so tief, dass die Kugel 10 noch aus dem Kanal 21 herausragt und so vom Mitnehmer 2a an der Rolle 2 erfasst werden kann. Der Kanal verläuft konzentrisch zum Drehpunkt des Rades 2.

Nur wenn sich die Kugel 10 im Kanal 21 befindet, kommt der Mitnehmer 2a mit der Kugel 10 in Kontakt, ansonsten kommt der Mitnehmer 2a bei einer Drehung des Rades 2 mit keinem anderen Element der Wegfahrsperre in Kontakt.

Die Kugel 10 stößt ihrerseits an eine Kante 14 d der Wippe 14 und überträgt so die vom geschobenen Rad 2 ausgehende Kraft auf die Wippe 14.

Hierdurch ist erreicht, dass zur Bewegung der Wippe 14 eine ausreichend große Kraft zur Verfügung steht.

Wie bei der Figur 3 schon beschrieben, bewirkt die Bewegung der Wippe 14 auch eine Bewegung des Hebels 18 und dieser Hebel 18 löst den magnetischen Körper 6 vom Permanentmagneten 13. Daraufhin kann die Auslöseeinheit 3 die Grundstellung einnehmen, in welcher u.a. die Sperre 7 die Kugel 10 daran hindert entlang der Rinne 19 in den Kanal 20 zu rollen.

Durch den Mitnehmer 2a am Rad 2 wird die Kugel 10 nun noch weiter im Kanal 21 bewegt, bis die Kugel einen Durchbruch 22 erreicht hat und durch diesen Durchbruch den Kanal 21 wieder verlassen kann.

Die Kugel befindet sich nun ebenso wie die Sperre 7 in der Grundstellung.

Bei einer erneuten Aktivierung der Auslöseeinheit 3 beginnt der gleiche Ablauf, nur mit dem einen Unterschied, dass durch die Bewegung der Wippe 14 das in Figur 2 beschriebene Halteelement 17 eine Stellung einnimmt, in der die Wippe wieder freigegeben ist.

Auch die Ratsche 15 greift nun nicht mehr in die Verzahnung 16. Das Rad ist wieder frei um die Achse L lenkbar.

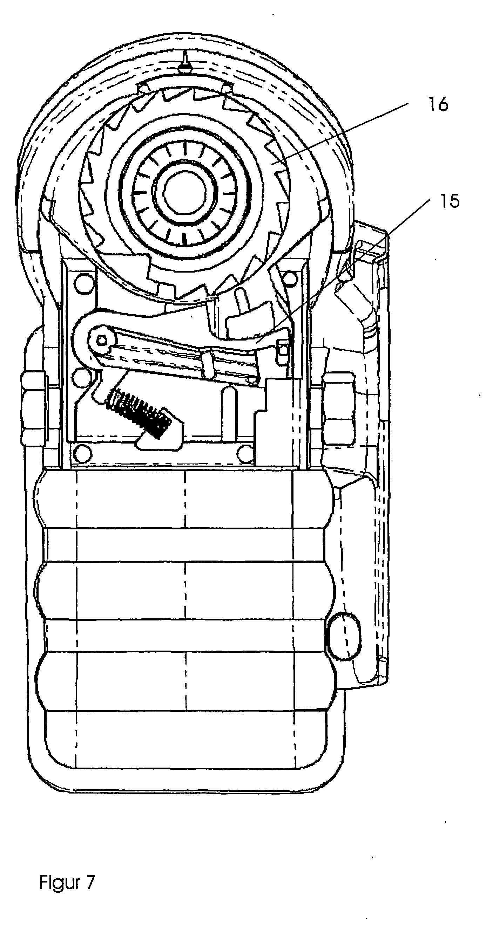

Die Figur 7 zeigt die aus Figur 1 bekannte Wegfahrsperre von oben. In dieser Ansicht ist die Ratsche 15 und die Verzahnung 16 deutlich sichtbar.

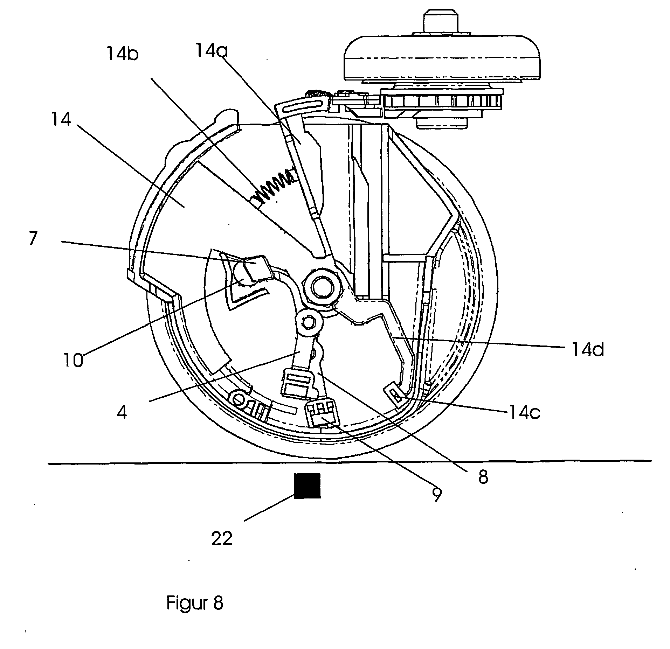

Die Figur 8 zeigt eine Weiterbildung der Erfindung. Die Wegfahrsperre befindet sich im deaktivierten Zustand und ist gerade in den Einflussbereich des Magneten 22 gekommen. An der Wippe 14 befindet sich ein Hebel 14b, an dessen Ende ein Magnet 14c befestigt ist.

Der Magnet 22 hat ein schwächeres Magnetfeld als der aus der Figur 2 bekannte Magnet 11. Die Kraft des schwächeren Magneten 22 erzeugt lediglich eine geringe Wirkung auf den Magneten 9 und daraus lediglich eine leichte Auslenkung der Hebel 4 und 8, die Sperre 7 gibt die Kugel 10 daher nicht frei.

Der Magnet 14c ist so weit vom Magneten 9 entfernt, dass keine Kräfte entstehen, welche ein stärkeres Schwenken der Hebel 4 und 8 bewirken.

Wenn die Wegfahrsperre den Magneten 22 passiert ändert sich nichts am Zustand der Wegfahrsperre.

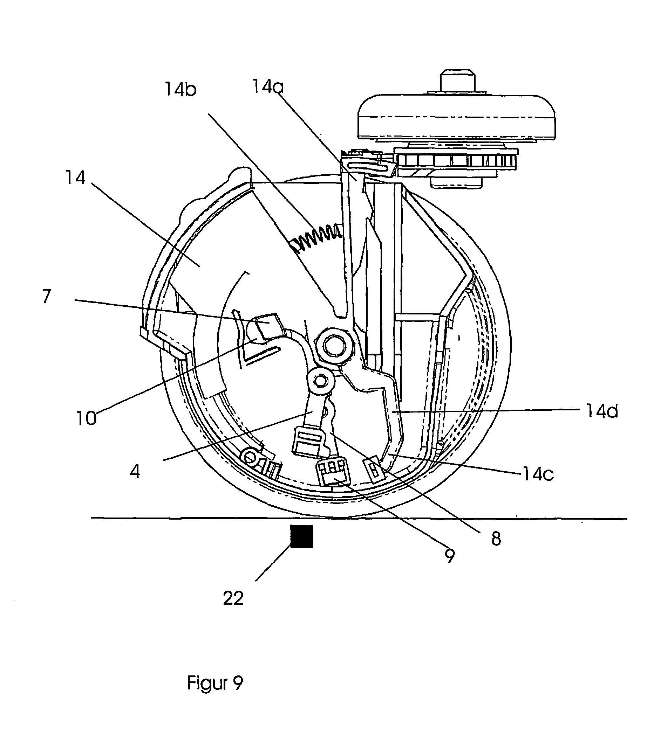

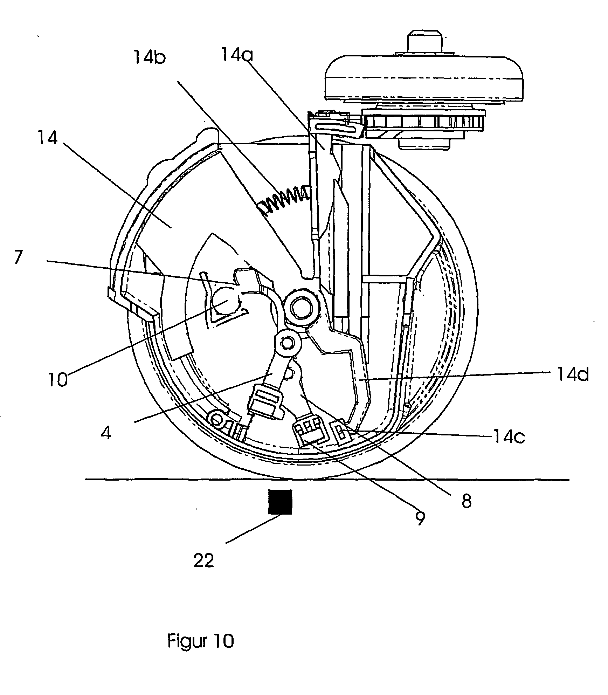

Die Figuren 9 und 10 zeigen die aus Figur 4 bekannte Weiterbildung der Wegfahrsperre im aktivierten Zustand.

Im aktivierten Zustand der Wegfahrsperre befindet sich der Magnet 14c an einer anderen Position innerhalb der Wegfahrsperre.

Durch den Magneten 22 wird wiederum nur eine leichte Auslenkung der Hebel 4 und 8 erzeugt, (Figur 9) der Magnet 14c ist jedoch so nahe am Magneten 9, dass der Magnet 9 weiter bewegt wird und es stellt sich die in Figur 10 gezeigte Endposition ein.

Hierdurch ergibt sich eine so starke Auslenkung der Hebel 4 und 8, dass die Sperre 7 die Kugel 10 freigibt. (Figur 10)

Die Eigenschaft der erfindungsgemäßen Wegfahrsperre auf ein schwächeres Magnetfeld selektiv mit einer Deaktivierung zu reagieren kann in verschiedener Weise vorteilhaft ausgenutzt werden.

So ist es möglich, innerhalb des zulässigen Bereichs magnetische Zonen mit geringer Intensität anzubringen, bei deren Überfahren eine Wegfahrsperre, die noch aktiviert ist deaktiviert wird.

Eine solche magnetische Zone geringer Intensität ist beispielsweise vorteilhaft im Bereich der Sammelstellen von Einkaufswagen anzuordnen, um sicherzustellen, dass alle Einkaufswagen die der Sammelstelle entnommen werden diese Zone passieren und somit eine eventuell noch aktivierte Wegfahrsperre deaktiviert wird.

Wenn eine solche schwach magnetische Zone innerhalb des zulässigen Bereichs aber in relativer Nähe zu der Zone mit starkem magnetischem Feld liegt, welche die Grenze zum unzulässigen Bereich markiert, dann kann man mit dieser schwachen Zone die Wegfahrsperren derjenigen Transportwagen, welche aus dem unzulässigen Bereich zurück in den zulässigen Bereich gebracht werden noch zuverlässiger deaktivieren:

Durch die stark magnetische Zone werden grundsätzlich alle aktivierten Wegfahrsperren deaktiviert. Wenn dann aber aus irgend einem Grund eine der Wegfahrsperren nach dem Passieren der stark magnetischen Zone doch noch nicht deaktiviert sein sollte, so erfolgt deren Deaktivierung beim Überfahren der schwach magnetischen Zone.

Da eine aktivierte Wegfahrsperre durch ein schwächeres Magnetfeld deaktiviert werden kann, wird die Wegfahrsperre oft auch dann deaktiviert, wenn ein von Außen zurückgebrachter, einseitig angehobener Einkaufswagen die Grenze zum zulässigen Bereich und somit die Zone mit starkem magnetischen Feld passiert.

Die Erfindung ist gewerblich überall dort anwendbar, wo verhindert werden soll, dass Einkaufswagen oder andere Transportwagen einen zulässigen Bereich verlassen.

## Patentansprüche

1. Wegfahrsperre, wobei durch magnetisch hervorgerufene Kräfte, welche auf eine Auslöseeinheit einwirken, diese Auslöseeinheit bewegbar ist und durch die Bewegung dieser Auslöseeinheit die Wegfahrsperre aktivierbar ist, wobei
- die Auslöseeinheit (3) Mittel (4a, 4b, 6, 8, 9) aufweist, welche die Auswirkungen von Störkräften kompensieren und somit eine wesentliche Bewegung der Auslöseeinheit (3) verhindern und
- die Auslöseeinheit (3) Mittel (8, 9) aufweist, die aufgrund magnetisch hervorgerufener Kräfte eine Bewegung der Auslöseeinheit (3) in die auslösende Position bewirken. **dadurch gekennzeichnet, dass**
- die Auslöseeinheit (3) einen um eine Achse (5) drehbar gelagerten ersten Hebel (4) mit zwei Hebelarmen (4a, 4b) umfasst und einer der Hebelarme (4a) ein Gewicht (6) aufweist
- die Auslöseeinheit (3) einen Permanentmagneten (9) umfasst, der an einem um eine weitere Achse (5a) drehbar gelagerten einarmigen zweiten Hebel (8) befestigt ist,
- zwischen dem ersten Hebel (4) und dem zweiten Hebel (8) eine solche Wirkverbindung besteht, bei welcher Kräfte, die auf den ersten Hebel (4) und den zweiten Hebel (8) einwirken sich gegenseitig kompensieren und keine wesentliche Bewegung der Auslöseeinheit (3) bewirken und
- eine Kraft, die allein auf den zweiten Hebel (8) einwirkt, der den Permanentmagneten (9) trägt, eine Bewegung der Auslöseeinheit (3) in die auslösende Position bewirkt.

2. Wegfahrsperre nach Anspruch 1
**dadurch gekennzeichnet, dass**
die Auslöseeinheit (3) einen Körper (6) und einen Permanentmagneten (9) umfasst, wobei der Körper (6) aus einem Material besteht, das mit einem Magneten in Wechselwirkung tritt.

3. Wegfahrsperre nach einem der vorangegangenen Ansprüche
**dadurch gekennzeichnet, dass**
das Auslöseelement (3) auch dann in der ausgelösten Position fixiert verbleibt, wenn die Kraft, welche für die Bewegung der Auslöseeinheit (3) in die ausgelöste Position verantwortlich war nicht mehr wirkt.

4. Wegfabursperre nach einem der vorangegangenen Ansprüche
**dadurch gekennzeichnet, dass**
die Auslöseeinheit (3) in der ausgelösten Position fixiert verbleibt, da ein kraft- oder formschlüssiges Halteelement (13) den Hebelarm (4a) fixiert.

5. Wegfahrsperre nach Anspruch 4
**dadurch gekennzeichnet, dass**
das Halteelement (13) als ein weiterer, stationär in der Wegfahrsperre (1) vorhandener Permanentmagnet (13) ausgebildet ist, der den Körper (6) mit magnetischen Kräften fixiert.

6. Wegfahrsperre nach einem der vorangegangenen Ansprüche
**dadurch gekennzeichnet, dass**
Mittel (14c, 18) vorgesehen sind, welche den fixierten Zustand der Auslöseeinheit (3) beenden, sobald weitere Komponenten der Wegfahrsperre (1) einen definierten Zustand eingenommen haben.

7. Wegfahrsperren nach Anspruch 6
**dadurch gekennzeichnet, dass**
der fixierte Zustand der Auslöseeinheit (3) durch eine zwangsgcsteuerte Mechanik (14c, 18) beendbar ist.

8. Wegfahrsperre nach einem der vorangegangenen Ansprüche
**dadurch gekennzeichnet, dass**
die Wegfahrsperre (1) durch magnetische Kräfte deaktivierbar ist.

9. Wegfahrsperre nach einem der vorangegangenen Ansprüche
**dadurch gekennzeichnet, dass**
die Wegfahrsperren (1) durch magnetische Kräfte deaktivierbar ist, die denen entsprechen, durch welche die Wegfahrsperre aktivierbar ist.

10. Wegfahrsperre nach Anspruch 8
**dadurch gekennzeichnet, dass**
die Wegfahrsperre (1) durch magnetische Kräfte deaktivierbar ist, die geringer sind, als die magnetischen Kräfte, welche benötigt werden, um die Wegfahrsperre zu aktivieren.

11. Wegfahrsperre nach Anspruch 10
**dadurch gekennzeichnet, dass**
die Wegfahrsperre einen Magneten (14d) enthält, der bei aktivierter Wegfahrsperre eine Position einnimmt, in welcher das Magnetfeld des Magneten (14d) auf den Permanentmagneten (9) einwirkt und das von außen wirkende Magnetfeld dergestalt unterstützt, dass die Auslöseeinheit (3) die Auslöse Position einnimmt.

## Claims

1. Immobilizer, wherein by magnetically caused forces which act on an initiation unit, this initiation unit is movable and through the movement of this initiation unit the immobilizer is able to be activated, wherein
- the initiation unit (3) has means (4a, 4b, 6, 8, 9), which compensate for the effects of intrusive forces and therefore prevent a substantial movement of the initiation unit (3) and
- the initiation unit (3) has means (8, 9) which owing to magnetically caused forces bring about a movement of the initiation unit (3) into the initiating position,
**characterized in that**
- the initiation unit (3) comprises a first lever (4) rotatably mounted about an axis (5) with two lever arms (4a, 4b) and one of the lever arms (4a) has a weight (6),
- the initiation unit (3) comprises a permanent magnet (9) which is fastened on a one-armed second lever (8) rotatably mounted about a further axis (5a),
- between the first lever (4) and the second lever (8) such an operating connection exists, in which forces which act on the first lever (4) and on the second lever (8) compensate for each other reciprocally and do not bring about any substantial movement of the initiation unit (3) and
- a force which acts solely on the second lever (8), which carries the permanent magnet (9), brings about a movement of the initiation unit (3) into the initiating position.

2. Immobilizer according to Claim 1,
**characterized in that**
the initiation unit (3) comprises a body (6) and a permanent magnet (9), wherein the body (6) consists of a material which enters into reciprocal action with a magnet.

3. Immobilizer according to one of the preceding claims,
**characterized in that**
the initiation element (3) also remains fixed in the initiated position when the force which was responsible for the movement of the initiation unit (3) into the initiated position is no longer acting.

4. Immobilizer according to one of the preceding claims,
**characterized in that**
the initiation unit (3) remains fixed in the initiated position, because a force-fitting or form-fitting holding element (13) fixes the lever arm (4a).

5. Immobilizer according to claim 4,
**characterized in that**
the holding element (13) is constructed as a further permanent magnet (13) which is present in a stationary manner in the immobilizer (1) and which fixes the body (6) by magnetic forces.

6. Immobilizer according to one of the preceding claims,
**characterized in that**
means (14c, 18) are provided, which terminate the fixed state of the initiation unit (3) as soon as further components of the immobilizer (1) have assumed a defined state.

7. Immobilizer according to Claim 6,
**characterized in that**
the fixed state of the initiation unit (3) is able to be terminated by a positively controlled mechanism (14c, 18).

8. Immobilizer according to one of the preceding claims,
**characterized in that**
the immobilizer (1) is able to be deactivated by magnetic forces.

9. Immobilizer according to one of the preceding claims,
**characterized in that**
the immobilizer (1) is able to be deactivated by magnetic forces which correspond to those by which the immobilizer is able to be activated.

10. Immobilizer according to Claim 8,
**characterized in that**
the immobilizer (1) is able to be deactivated by magnetic forces which are less than the magnetic forces which are required in order to activate the immobilizer.

11. Immobilizer according to Claim 10,
**characterized in that**
the immobilizer contains a magnet (14d) which, when the immobilizer is activated, assumes a position in which the magnetic field of the magnet (14d) acts on the permanent magnet (9) and supports the magnetic field acting from the exterior such that the initiation unit (3) assumes the initiation position.

## Revendications

1. Système d'immobilisation, dans lequel par l'intermédiaire de forces générées magnétiquement, qui influent sur une unité de déclenchement, cette unité de déclenchement peut être mise en mouvement et le système d'immobilisation peut être activé par l'intermédiaire du mouvement de cette unité de déclenchement, dans lequel
- l'unité de déclenchement (3) présente des moyens (4a, 4b, 6 , 8, 9), qui compensent les répercussions des forces perturbatrices et empêchent donc un mouvement essentiel de l'unité de déclenchement (3) et
- l'unité de déclenchement (3) présente des moyens (8, 9), qui provoquent en raison des forces générées magnétiquement un mouvement de l'unité de déclenchement (3) dans la position de déclenchement, **caractérisé en ce que**
- l'unité de déclenchement (3) comprend un premier levier (4) positionné rotativement autour d'un axe (5) comportant deux bras de levier (4a, 4b) et un des bras de levier (4a) présente un poids (6)
- l'unité de déclenchement (3) comprend un aimant permanent (9), qui est fixé sur un deuxième levier (8) à un bras positionné rotativement autour d'un axe (5a) supplémentaire,
- entre le premier levier (4) et le deuxième levier (8) une liaison opérationnelle est instituée, par laquelle les forces, qui influent sur le premier levier (4) et le deuxième levier (8) se compensent mutuellement et ne provoquent aucun mouvement essentiel de l'unité de déclenchement (3) et
- une force, qui influe seule sur le levier (8), qui supporte l'aimant permanent (9), provoque un mouvement de l'unité de déclenchement (3) dans la position de déclenchement.

2. Système d'immobilisation selon la revendication 1,
**caractérisé en ce que**
l'unité de déclenchement (3) comprend un corps (6) et un aimant permanent (9), dans lequel le corps (6) est constitué d'un matériau, qui entre en interaction avec un aimant.

3. Système d'immobilisation selon une des revendications précédentes,
**caractérisé en ce que**
l'élément de déclenchement (3) reste fixé également dans la position déclenchée, quand la force, qui était responsable du mouvement de l'unité de déclenchement (3) dans la position déclenchée, n'agit plus.

4. Système d'immobilisation selon une des revendications précédentes, **caractérisé en ce que**
l'unité de déclenchement (3) reste fixé dans la position déclenchée, puisque un élément de retenue (13) par conjonction de force ou par conjonction de forme fixe le bras de levier (4a).

5. Système d'immobilisation selon la revendication 4,
**caractérisé en ce que**
l'élément de retenue (13) est réalisé comme un aimant permanent (13) supplémentaire, présent de manière stationnaire dans le système d'immobilisation (1), qui fixe le corps (6) avec des forces magnétiques.

6. Système d'immobilisation selon une des revendications précédentes,
**caractérisé en ce que**
des moyens (14c, 18) sont prévus, qui mettent fin à l'état fixé de l'unité de déclenchement (3), dès que d'autres composants du système d'immobilisation (1) ont adopté un état défini.

7. Système d'immobilisation selon la revendication 6,
**caractérisé en ce que**
une mécanique à commande forcée (14c, 18) peut mettre fin à l'état fixé de l'unité de déclenchement (3).

8. Système d'immobilisation selon une des revendications précédentes,
**caractérisé en ce que**
le système d'immobilisation (1) peut être désactivé par des forces magnétiques.

9. Système d'immobilisation selon une des revendications précédentes,
**caractérisé en ce que**
le système d'immobilisation (1) peut être désactivé par des forces magnétiques, qui correspondent à celles par l'intermédiaire desquelles le système d'immobilisation peut être activé.

10. Système d'immobilisation selon la revendication 8,
**caractérisé en ce que**
le système d'immobilisation (1) peut être désactivé par des forces magnétiques, qui sont moindres que les forces magnétiques, qui sont requises pour activer le système d'immobilisation.

11. Système d'immobilisation selon la revendication 10,
**caractérisé en ce que**
le système d'immobilisation contient un aimant (14d), qui lorsque le système d'immobilisation est activé, adopte une position, dans laquelle le champ magnétique de l'aimant (14d) influe sur l'aimant permanent (9) et assiste le champ magnétique agissant vers l'extérieur de telle sorte que l'unité de déclenchement (3) adopte la position de déclenchement.
